# EUROPEAN PATENT APPLICATION

(11) **EP 1 935 850 A2**
(43) Date of publication of application: **25.06.2008**
(21) Application number: 07123519.6
(22) Date of filing: 18.12.2007
(51) Int. Cl.: C01G 31/00, H01M 4/48, H01M 10/40

(54) **Composition for negative electrodes and non-aqueous rechargeable battery prepared using Same**

(30) Priority: 18.12.2006 JP 2006339508; 26.11.2007 KR 20070120974
(71) Applicant: Samsung SDI Co., Ltd., Suwon-si, Gyeonggi-do (KR)
(72) Inventor: Kim, Sung-Soo Samsung SDI Co., Ltd., Suwon-si Gyeonggi-do (KR); Maeda, Hideaki, Kanagawa-ken Kanagawa (JP); Koike, Masaki, Kanagawa-ken Kanagawa (JP); Hiramura, Yasuaki, Kanagawa-ken Kanagawa (JP); Hiyama, Susumu, Kanagawa-ken Kanagawa (JP); Shinkai, Sabro, Kanagawa-ken Kanagawa (JP); Katsumi, Manabu, Fujisawa-shi Kanagawa-ken Kanagawa (JP)
(74) Representative: Killin, Stephen James

(57) **Abstract**

The present invention relates to a negative material for a non-aqueous rechargeable battery and a non-aqueous rechargeable battery including the same. The negative material for a non-aqueous rechargeable battery includes lithium vanadium oxide that is obtained by mixing a lithium compound such as lithium carbonate (Li₂CO₃) and a vanadium compound such as vanadium pentaoxide (V₂O₅) with an organic acid such as oxalic acid (COOH)₂ to obtain an organic acid salt precursor and firing the organic acid salt precursor. The negative material for a non-aqueous rechargeable battery can improve charge and discharge characteristics of a non-aqueous rechargeable battery due to uniform composition.

## Description

The present invention relates to a negative material for a non-aqueous rechargeable battery such as a lithium ion rechargeable battery and a non-aqueous rechargeable battery including the same. More particularly, the present invention relates to a negative material for a non-aqueous rechargeable battery being able to improve the charge and discharge characteristics of a non-aqueous rechargeable battery due to uniform composition of the negative material, and to a non-aqueous rechargeable battery including the improved negative material.

Contemporary rechargeable lithium batteries include a positive electrode and a negative electrode that are capable of intercalating and deintercalating lithium ions respectively, impregnated in a non-aqueous electrolyte *(see* claims 3-11 and FIGURE 10 disclosed in Japanese Patent laid-open No. 2003-68305 to Koji Yamamoto et al.*,* entitled *Negative Material for Secondary Lithium Battery and its Manufacturing Method,* published on 7 March 2003). The negative active material includes lithium vanadium oxide. The lithium vanadium oxide is prepared by mixing a lithium source, such as lithium hydroxide and the like, and a vanadium source, such as vanadium trioxide and the like, in a solid-phase method, and firing the mixture at 650 °C or higher.

When a non-aqueous rechargeable battery is charged, and its negative electrode is electrified to be negative, lithium ions intercalated into the positive electrode are deintercalated and then intercalated into the negative electrode. In addition, when a non-aqueous rechargeable battery is discharged, lithium ions intercalated into the negative electrode are deintercalated and then intercalated into the positive electrode.

The test cell including an electrode of metallic lithium and a counter electrode of a lithium vanadium oxide sample may be prepared according to contemporary practice with a solid-phase method was measured for the lithium standard open current potential by drying and mixing lithium hydroxide and vanadium trioxide, then firing it under a nitrogen atmosphere at 1100 °C.

When the lithium vanadium oxide is prepared with a drying method however, the composition of the subject material is not uniform and it is hard to maintain a stable crystalline structure. Consequently, the potential is not stabilized after repeated charge and discharge cycles, so that the charge and discharge characteristics deteriorate after several repetitions of charge and discharge cycles.

Accordingly, in a first aspect of the present invention, there is provided a negative material for a non-aqueous rechargeable battery comprising lithium vanadium oxide: wherein the lithium vanadium oxide has an open circuit potential having a plateau over 25% or more based on the entire reaction period of the intercalation or deintercalation of lithium ions; wherein the plateau is varied within 0.05V when the lithium electrode is charged and discharged; and wherein the plateau has an average potential of intercalation of lithium ions ranging from 0.20 to 0.25 V and an average potential of deintercalation of lithium ions ranging from 0.23 to 0.27 V.

In a second aspect of the present invention, there is provided a non-aqueous rechargeable battery, comprising: a negative electrode; a positive electrode; and an electrolyte; wherein the negative electrode comprises a lithium vanadium oxide having an open circuit potential having a plateau over 25% or more based on the entire reaction period of the intercalation or deintercalation of lithium ions; wherein the plateau is varied within 0.05V when the lithium electrode is charged and discharged; and wherein the plateau has an average potential of intercalation of lithium ions ranging from 0.20 to 0.25 V and an average potential of deintercalation of lithium ions ranging from 0.23 to 0.27 V.

In a third aspect of the present invention, there is provided a method of making a lithium vanadium oxide for a negative material of a battery, which comprises mixing a lithium compound and a vanadium compound with an organic acid to obtain an organic acid salt precursor, and firing the organic acid salt precursor.

In a fourth aspect of the present invention, there is provided a lithium vanadium oxide obtainable by a method according to the invention in its third aspect.

In a fifth aspect of the present invention, there is provided the use of a lithium vanadium oxide according to the invention in its fourth aspect, or as defined in relation to the invention in its first or second aspects, for a negative material of a non-aqueous rechargeable battery.

The negative material for a non-aqueous rechargeable battery has a uniform composition, so it can improve the charge and discharge characteristics of a non-aqueous rechargeable battery.

Preferred embodiments of the present invention in any of its various aspects are as described below or as defined in the sub-claims.

A more complete appreciation of the invention, and many of the attendant advantages thereof, will be readily apparent by reference to the following detailed description when considered in conjunction with the accompanying drawings,, wherein:
FIGURE 1 is a two coordinate graph illustrating a relationship between the capacity and potential of a negative material for a contemporary, non-aqueous rechargeable battery.
FIGURE 2 is a vertical cross-sectional elevation view of a non-aqueous rechargeable battery constructed as one embodiment of the principles of the present invention.
FIGURE 3 is a two coordinate graph showing an X-ray diffraction analysis result of lithium vanadium oxides according to Example 1 and Comparative Example 1.
FIGURE 4 is a two coordinate graph illustrating a partially enlarged view of a peak for the (003) plane shown in FIGURE 3 for Example 1 and Comparative Example 1.
FIGURE 5 is a two coordinate graph illustrating a relationship between discharge capacity of the negative material for a non-aqueous rechargeable battery as a function of the ratio of lithium and vanadium used during formation of an organic acid salt.
FIGURE 6 shows a relationship between an amount of an organic acid used during formation of an organic acid salt, and discharge capacity of the negative material for a non-aqueous rechargeable battery.
FIGURE 7 shows a relationship between capacity and potential in mAh/g of the negative material for a non-aqueous rechargeable battery according to Example 1.

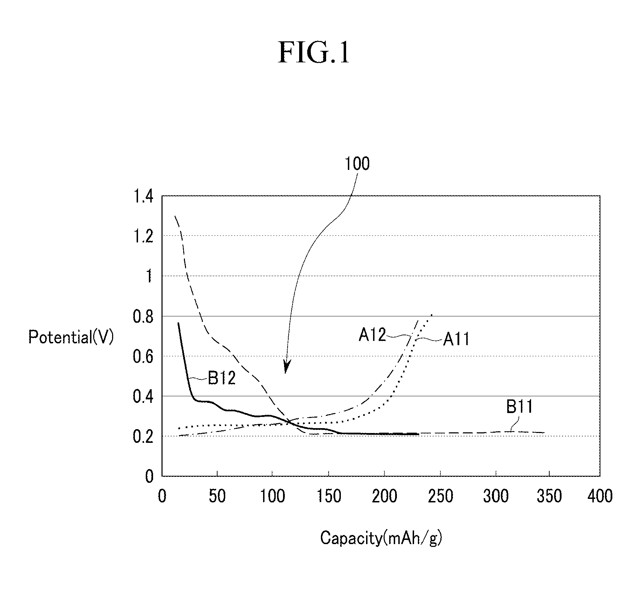

Turning now to the drawings, FIGURE 1 shows charge and discharge characteristics of a contemporary lithium vanadium oxide negative material. As earlier explained herein, when a non-aqueous rechargeable battery is charged, and its negative electrode is electrified to be negative, lithium ions intercalated into the positive electrode are deintercalated from the positive electrode and those deintercalated lithium ions are then intercalated into the negative electrode. In addition, when a non-aqueous rechargeable battery is discharged, lithium ions intercalated into the negative electrode are deintercalated from the negative electrode and those deintercalated lithium ions are then intercalated into the positive electrode.

A test cell including an electrode of metallic lithium and a counter electrode of the conventional lithium vanadium oxide sample prepared by a solid-phase method was measured for the lithium standard open current potential. The vertical axis refers to the voltage potential (unit: Volts), and the horizontal axis refers to capacity (unit: mAh/g). The sample is obtained by drying and mixing lithium hydroxide and vanadium trioxide, then firing the mixture of lithium hydroxide and vanadium trioxide under a nitrogen atmosphere at 1100 °C.

In FIGURE 1, A11 refers to the first intercalation of lithium ions when the negative electrode is electrified to become negative and lithium ions are intercalated into the negative electrode while the non-aqueous rechargeable battery is being charged, and B11 refers to the first deintercalation of lithium ions from the negative electrode when the non-aqueous rechargeable battery is discharged. A12 refers to the 10th intercalation of lithium ions when the negative electrode is electrified to become negative and the lithium ions are intercalated into the negative electrode, and B12 refers to the 10th deintercalation of lithium ions from the negative electrode.

As shown in FIGURE 1, a plateau, 100 in which the potential varies within 0.05V when lithium ions are firstly intercalated (A11) into the negative electrode and first deintercalated (B11) from the negative electrode, is formed over less than 25% of the abscissa based on the entire reaction period illustrated, where the abscissa is defined as the horizontal axis. That is, the flat potential is shown when lithium ions are intercalated into and deintercalated from the negative electrode material during the first cycle. On the other hand, the plateau, is not shown during the 10th intercalation (A12) of lithium ions and 10th deintercalation (B12) of lithium ions, which shows that the charge and discharge characteristics are not preferable.

When the lithium vanadium oxide is prepared by a drying method, the composition of the subject material is not uniform and it is therefore hard to maintain a stable crystalline structure. Then, because the potential is not stabilized after repeating the charge and discharge, so the charge and discharge characteristics deteriorate.

Turning now to the principles of the present invention, a negative material for a non-aqueous rechargeable battery constructed as one embodiment, may be prepared with lithium vanadium oxide by firing an organic acid salt including lithium and vanadium.

The negative material for a non-aqueous rechargeable battery includes lithium vanadium oxide including LiₐV_{b}M_{c}O_{d} that is obtained by firing an organic acid salt precursor, LiₐV_{b}M_{c}O_{d}(C₂O₄). The M is an arbitrary element, and, a, b, c, and d are arbitrary values.

The organic acid salt is obtained by mixing a lithium compound and a vanadium compound with an organic acid. According to one embodiment, the organic acid salt such as LiₐV_{b}M_{c}O_{d} C₂O₄ is prepared by mixing a lithium compound such as Li₂CO₃ together with a vanadium compound such as V₂O₅ with an organic acid such as (COOH)₂.

The negative material obtained from the above method has a peak intensity ratio of the (104) plane to the (003) plane ranging from between 0.2 to 0.8. According to another embodiment, the peak intensity ratio of the (104) plane to the (003) plane ranges from 0.3 to 0.6. When the peak intensity ratio is less than 0.2 however, the obtained crystal phase has problems because a layered basal plane is mainly developed and a prismatic plane is less developed.

According to one embodiment, the negative material for a non-aqueous rechargeable battery has a molar ratio of lithium and vanadium in the lithium compound and the vanadium compound that are mixed with an organic acid salt that ranges from between 1.2:1 to 1.24:1.

Furthermore, according to one embodiment, the organic acid is present at a molar weight of between 1.5 to 5 times more than the molar weight required for reacting with the lithium compound and the vanadium compound.

According to the embodiment, the organic acid salt is obtained from the chemical reaction represented in the following Reaction Scheme 1. The amount of organic acid used in the reaction refers to X-Y moles, and the amount of organic acid present in the reaction refers to X moles. Furthermore, z is an arbitrary value.

### [Reaction Scheme 1]

0.22Li₂CO₃+V₂O₅+X(COOH)₂+zM → 6 LiₐV_{b}M_{c}O_{d} C₂O₄+Y(COOH)₂ (1)

According to the negative material for a non-aqueous rechargeable battery of one embodiment, the lithium vanadium oxide forms a plateau in which the potential varies within a range of 0.05V when the lithium ions are intercalated (A11) and deintercalated (B11) during the first cycle over 25% or more based of the cycle as illustrated along the abscissa, over the entire reaction period (horizontal axis).

Plateau has an average potential for intercalating lithium ions ranging from between 0.20 to 0.25 Volts, and an average potential for deintercalating lithium ions ranging from between 0.23 to 0.27 Volts.

According to the embodiment, the charge and discharge characteristics are determined with a test cell including an electrode of a negative material including lithium vanadium oxide and a counter electrode including metallic lithium. The test cell shows a flat potential in which the open circuit potential ranges from 0.20 to 0.25V when lithium ions are intercalated. Further, the flat potential ranges have an open circuit potential ranging from 0.23 to 0.27V when lithium ions are deintercalated. The flat potential has a plateau in which the potential is varied within 0.05V over 25% or more based on the entire reaction period of intercalation and deintercalation of lithium ions.

In the negative material for a non-aqueous rechargeable battery constructed as one embodiment, the charge and discharge characteristics after the first intercalation and deintercalation of lithium ions have a plateau over 25% or more along the abscissa based on the entire reaction period. According to this embodiment, in the charge and discharge characteristics after the second cycle, the plateau, the potential varies within 0.05V over 25% or more based on the entire reaction period is shown when the lithium ions are intercalated and deintercalated. Furthermore, after the capacity has deteriorated by almost the entirety of the life-cycle, the plateau may be shown over less than 25% of the reaction cycle displayed along the abscissa, based on the entire reaction period.

According to another embodiment, in the negative material for a non-aqueous rechargeable battery for that embodiment, the charge and discharge characteristics after the first intercalation and deintercalation of lithium ions has a plateau that extends over 40% or more of the reaction cycle illustrated along the abscissa, based on the entire reaction period. According to this embodiment, the charge and discharge characteristics have a plateau in which the potential varies within 0.05V over 40% or more along the abscissa, based on the entire reaction period when the lithium ions are intercalated and deintercalated for two or more cycles. Furthermore, after the capacity has deteriorated over the designated cycle-life of that battery, the plateau may decrease to a value of somewhat less than 40% based on the entire reaction period illustrated along the abscissa.

According to a negative material for a non-aqueous rechargeable battery including lithium vanadium oxide for another embodiment, the charge and discharge characteristics have a plateau, in which the potential is varies within a maximum of 0.05V over 25% or more alone the abscissa, based on the entire reaction period of the intercalation or deintercalation of lithium ions illustrated, and the plateau, has an average potential of intercalation of lithium ions of between 0.20 and 0.25V and an average potential of deintercalation of lithium ions of between 0.23 and 0.27V, while the charge and discharge characteristics after the first intercalation and deintercalation have a plateau over 25% or more based along the abscissa, over the entire reaction period.

According to another embodiment, the non-aqueous rechargeable battery includes a negative electrode including the negative material for a non-aqueous rechargeable battery, a positive electrode, and an electrolyte.

According to one embodiment, a lithium vanadium oxide for a non-aqueous rechargeable battery is obtained by firing an organic acid salt including lithium and vanadium to provide a uniform composition and a stable structure. Thereby, the charge and discharge potential is more stable, and consequently, the charge and discharge characteristics are improved. The source of vanadium may include inexpensive V₂O₅ including 5 valent vanadium. Thereby, it is possible to reduce the cost for producing a negative material for a non-aqueous rechargeable battery and a non-aqueous rechargeable battery.

According to one embodiment, an organic acid salt is easily obtained by the wet method in which a lithium compound and a vanadium compound are mixed together with an organic acid and the mixture is fired.

Furthermore, since the molar ratio of lithium and vanadium included in the lithium compounds and the vanadium compounds that are mixed with the organic acid, is adjusted to between 1.2:1 and 1.24:1, it is possible to provide a non-aqueous rechargeable battery having a higher discharge capacity.

In another embodiment, since the organic acid is added in an excessive amount of between 1.5 to 5 times more than the molar weight required to react with the lithium compound and the vanadium compound, it is possible to provide a negative material that after firing, has a high discharge capacity.

According to another embodiment, the open circuit potential of the negative material has a desirable plateau. Since the plateau has an average potential for intercalating lithium ions ranging from between 0.20 to 0.25V and an average potential for deintercalating lithium ions ranging from between 0.23 to 0.27, it is possible to provide a flat potential that is near the potential of a negative material including graphite. Accordingly, the resulting non-aqueous rechargeable battery is endowed with high energy density by using lithium vanadium oxide that has a high capacity per volume, instead of using a conventional negative material including graphite.

Furthermore, it is possible to stabilize the potential and to improve the charge and discharge characteristics when the charge and discharge of the negative electrode are repeated since the plateau is formed over at least 25% of the abscissa, based on the entire reaction period after the first intercalation and deintercalation of lithium ions.

In addition, according to another embodiment, the potential is remarkably stabilized even though the charge and discharge are repeated; this stabilization is evidence from the plateau which is formed over 40% or more of the abscissa, based on the entire reaction period in the charge and discharge characteristics after the first intercalation and deintercalation.

Hereinafter, a non-aqueous rechargeable battery constructed as one embodiment of the present invention will be described referring to the attached drawings.

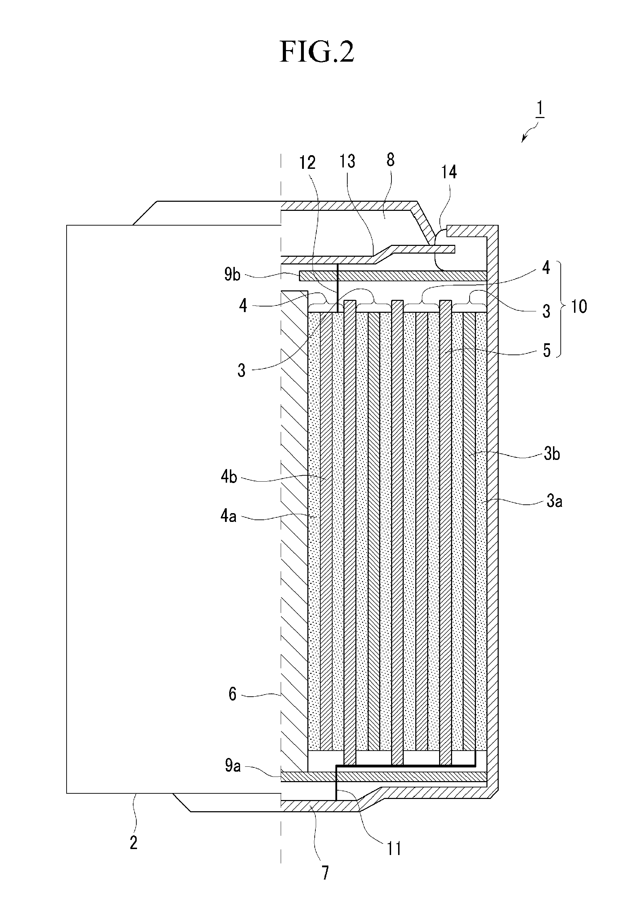

FIGURE 2 is a vertical cross-sectional elevation view of a non-aqueous rechargeable battery constructed as one embodiment of the present invention. Non-aqueous rechargeable battery 1 is a spirally wound cylindrical battery. Non-aqueous rechargeable battery 1 includes center pin 6 and electrode assembly 10 wound around center pin 6. Herein, electrode assembly 10 includes positive electrode 3 and negative electrode 4, and separator 5 inserted between positive electrode 3 and negative electrode 4. Accordingly, electrode assembly 10 has a cylindrical structure.

Positive electrode 3 is formed by disposing positive active mass 3a including a positive active material on both surfaces of positive current collector 3b. Negative electrode 4 is formed by disposing negative active mass 4a including a negative active material on both surfaces of negative current collector 4b. Cylindrical electrode assembly 10 is housed in cylindrical case 2 with a hollow interior, and is impregnated with an electrolyte (not separately shown). Positive electrode 3 contacts case 2, and has positive terminal 7 that protrudes at the bottom of case 2.

Electrode assembly 10 is mounted with insulating plates 9b and 9a at the top and bottom thereof. Positive current collector 3b passes through insulating plate 9a and contacts positive terminal 7 by way of positive electrode lead 11. Safety plate 13 is mounted above insulating plate 9b located at the opened base end of case 2 in the same direction as insulating plate 9b. Negative terminal 8 is shaped as a convex cap and is mounted on safety plate 13 in the opposite direction to safety plate 13.

Negative current collector 4b passes through insulating plate 9b and contacts negative terminal 8 by way of negative electrode lead 12. In addition, safety plate 13 and the edge of negative terminal 8 are sealed by an electrically insulating gasket 14, which separates safety plate 13 and negative terminal 8 from positive terminal 7.

The positive active material and the electrolyte may include a common positive electrode and electrolyte for a non-aqueous rechargeable battery. For example, the positive active material may include a lithium transition element oxide such as lithium cobalt oxide and the like. The electrolyte may include a solute including a lithium salt selected from the group consisting of LiPF₆, Li₂SiF₆, Li₂TiF₆, LiBF₄, and the like in a solvent such as ethylene carbonate, diethyl carbonate, or the like.

Negative electrode 4 includes the above material for a negative active material. Examples of the negative active material include lithium vanadium oxide represented by LiₐV_{b}M_{c}O_{d}. The representative element M is at least one element selected from the group consisting of transition elements, alkali metals, and alkaline earth metals, and the variables a, b, c, and d are arbitrary values. In addition, the negative electrode may be formed in the practice of the principles of this invention as follows: a negative material, a conductive agent such as acetylene black, and a binder are mixed to obtain a slurry, and then the slurry is coated onto a copper negative current collector 4b and pressed.

The lithium vanadium oxide is obtained by firing an organic acid salt precursor represented by LiₐV_{b}M_{c}O_{d}(C₂O₄) under an atmosphere such as nitrogen.

For example, the organic acid salt can be obtained by reacting a lithium compound such as lithium carbonate (Li₂CO₃), a vanadium compound such as vanadium pentoxide (V₂O₅), and an organic acid such as oxalic acid (COOH)₂ in an aqueous solution and then drying by evaporation.

Furthermore, when lithium carbonate, vanadium pentoxide, and oxalic acid are used, the cost can be particularly reduced and an organic acid salt can be obtained.

The lithium compound may include lithium hydroxide or lithium oxalate. The organic acid may include acetic acid, citric acid, malic acid, or succinic acid other than oxalic acid.

According to the manufacturing method, the lithium vanadium oxide is obtained by firing an organic acid salt in which lithium atoms and vanadium atoms are preliminarily mixed. In comparison to the conventional lithium vanadium oxide obtained by mixing a lithium compound and a vanadium compound and firing it, in the practice of the present invention, lithium and vanadium atoms tend to be uniformly solid-solved at a micron level in the embodiment. Accordingly, it is possible to provide a lithium vanadium oxide having a uniform composition. The following examples illustrate the principles of the present invention in greater detail. It is to be understood however, that the present invention is not limited by these examples.

### Example 1. Preparation of Lithium Vanadium Oxide

A lithium compound of lithium carbonate Li₂CO₃, a vanadium compound of vanadium pentoxide V₂O₅, and an organic acid of oxalic acid (COOH)₂ were mixed and reacted in an aqueous solution, then evaporated to provide an organic acid salt LiₐV_{b}M_{c}O_{d} C₂O₄. The molar ratio of lithium and vanadium of the lithium carbonate and vanadium pentoxide was 1.22:1, and the organic acid was added in the amount of 1.5 times more than the molar ratio required for reacting with the lithium carbide and vanadium pentoxide.

The obtained organic acid salt precursor was fired under a nitrogen atmosphere at 1100°C to obtain lithium vanadium oxide.

### Example 2. Preparation of Lithium Vanadium Oxide

Lithium vanadium oxide was prepared in accordance with the same procedure as in Example 1, except that citric acid was used instead of oxalic acid.

### Comparative Example 1

26.35g of LiOH and 67.5g of V₂O₃ were mixed according to a solid-phase method and fired at 650 °C to provide lithium vanadium oxide.

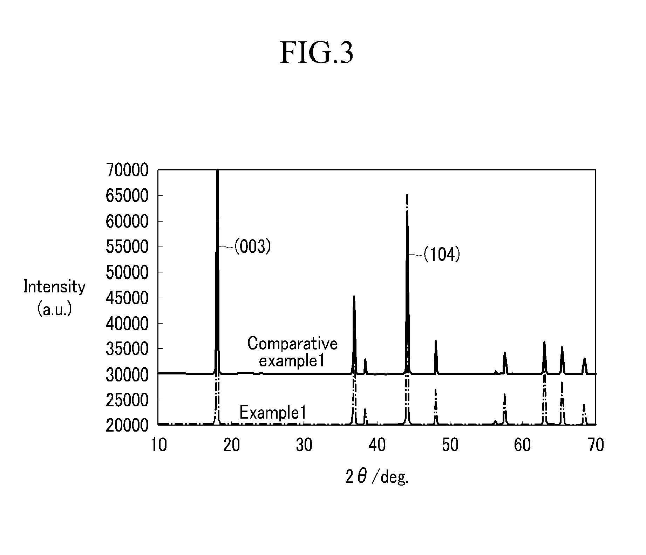

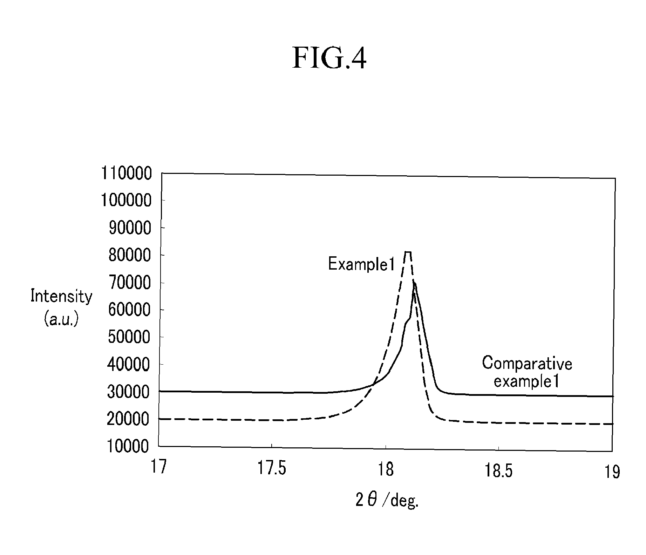

Lithium vanadium oxides prepared according to Example 1 and Comparative Example 1 were subjected to an X-ray diffraction analysis. The results are shown in FIGURES 3 and 4.

FIGURE 3 shows a graph showing an X-ray diffraction analysis result of lithium vanadium oxides according to Example 1 and Comparative Example 1, and FIGURE 4 is a partially enlarged view of the peak for the (003) plane shown in FIGURE 3.

As shown in FIGURES 3 and 4, the peak intensity ratio of the (104) plane to the (003) plane of lithium vanadium oxide prepared according to Example 1, was 0.6, and on the other hand, the peak intensity ratio of the (104) plane to the (003) plane of lithium vanadium oxide prepared according to Comparative Example 1, was 0.3.

### Example 3. Manufacturing Lithium Rechargeable Cell

For Example 3, 80 wt% of lithium vanadium oxide prepared from Example 1, 10 wt% of acetylene black, and 10 wt% of polyvinylidene fluoride were mixed and then coated onto a negative electrode current collector including copper. Then, the coated negative electrode current collector was compressed by as much as 1.8g/cm³ to provide a negative electrode.

91 wt% of a positive active material of LiCoO₂, 3 wt% of acetylene black, and 6 wt% of polyvinylidene fluoride were mixed to provide a positive electrode. Additionally, a solvent of a non-aqueous electrolyte solution included a mixed solvent of EC:DEC=3:7 (volume ratio), and the electrolyte included LiPF₆.

Then, the electrolyte solution was injected into the electrode assembly and the inlet was sealed after the cell stood for one hour to provide a lithium rechargeable cell.

### Example 4. Manufacturing Lithium Rechargeable Cell

A lithium rechargeable cell was manufactured in accordance with the same procedure as followed in Example 3, except that the lithium vanadium oxide prepared according to Example 2 was used.

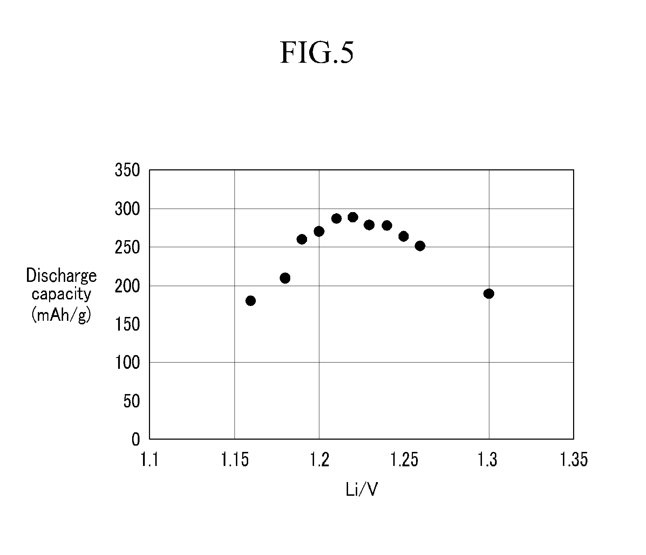

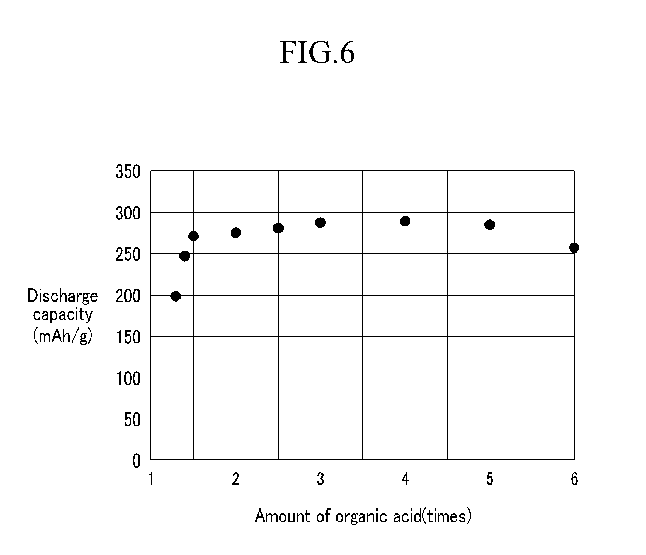

In Example 4, lithium vanadium oxide was prepared in accordance with the same procedure as in Example 1, except that the molar ratio of lithium and vanadium in Li₂CO₃ and V₂O₅ intercalated in (COOH)₂ was varied, or the amount of organic acid was which was added, was varied in different samples prepared for Example 4. Then, the lithium vanadium oxide was used for an electrode and the metallic lithium was used for a counter electrode to provide a test cell having a lithium standard open circuit potential. The cell was subjected to measurement of charge and discharge capacity, and these results are shown in FIGURES 5 and 6.

In FIGURE 5 and FIGURE 6, the ordinate, or vertical axis, refers to a discharge capacity (unit: mAh/g) of test cells. In FIGURE 5, the abscissa, or horizontal axis, refers to a molar ratio of lithium and vanadium in Li₂CO₃ and V₂O₅ intercalated in (COOH)₂. The organic acid was added in a molar weight of 1.5 times more than the molar weight required for reacting with lithium carbonate and vanadium pentoxide.

As shown in FIGURE 5, when the molar ratio of lithium in Li₂CO₃ and vanadium in V₂O₅ was between 1.2:1 and 1.24:1, it is possible to increase the discharge capacity.

Additionally, the horizontal axis of FIGURE 6 refers to the amount of (COOH)₂ existing in the reaction of Li₂CO₃, V₂O₅, and (COOH)₂ as a ratio when the used amount of (COOH)₂ was considered to be 1. In other words, the organic acid salt of LiₐV_{b}M_{c}O_{d} C₂O₄ is represented as Formula 1, and the amount of (COOH)₂ used in the reaction is X-Y moles. In FIGURE 6, the abscissa, or horizontal axis, refers to the ratio of X/(X-Y). Furthermore, z is an arbitrary value.

1.22Li₂CO₃+V₂O₅+X(COOH)₂+zM → 6 LiₐV_{b}M_{c}O_{d} C₂O₄+Y(COOH)lain ₂ (2)

As shown in FIGURE 6, it is possible to provide a high discharge capacity if (COOH)₂ exists in a molar weight of 1.5 to 5 times more than the molar weight required for reacting with Li₂CO₃ and V₂O₅.

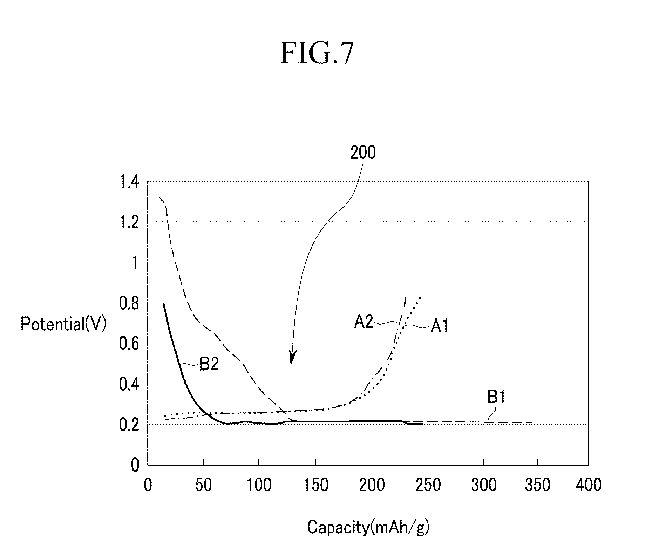

Lithium vanadium oxide of the negative material according to Example 1 was measured for charge and discharge characteristics. The results are shown in FIGURE 7.

The test cell included an electrode of metallic lithium and a counter electrode of lithium vanadium oxide according to Example 1, and it was measured for a lithium standard open circuit potential. The vertical axis refers to potential (unit: V), and the horizontal axis refers to capacity (unit: mAh/b). The molar ratio of lithium included in Li₂CO₃ and vanadium in V₂O₅ intercalated in (COOH)₂ was 1.22:1.

As shown in FIGURE 7, A1 refers to the potential in the case of the first intercalation of lithium ions. B1 refers to the potential in the case of the first deintercalation of lithium ions. A2 refers to the potential in the case of the 10th intercalation of lithium ions and B2 refers to the potential in the case of 10th deintercalation of lithium ions.

As shown in FIGURE 7, in the test cell including lithium vanadium oxide according to Example 1, the plateau, 200 at which the potential was varied within 0.05V was formed over 70% or more based on the entire reaction period (vertical axis) when lithium ions were intercalated at 1st and 10th times A1 and A2 and deintercalated at 1st and 10th times B1 and B2. When lithium was intercalated, the plateau had a flat potential having an average potential of around 0.22V, and when lithium was deintercalated, the plateau had a flat potential having an average potential of around 0.25V.

As shown in FIGURE 1, in the test cell using the conventional lithium vanadium oxide prepared by the solid phase method, a plateau was formed at the first intercalation A11 and deintercalation B11 of lithium ions. However, the plateau was not formed at the 10th intercalation A12 and deintercalation B12 of lithium ions.

It is postulated that this result occurred because the lithium vanadium oxide had a uniform particle composition and a stable crystalline structure. Thereby, it is possible to provide a non-aqueous rechargeable cell 1 having a stable charge and discharge potential. Further, in the lithium vanadium oxide prepared by the solid-phase method, a plateau was not formed on the second intercalation and deintercalation of lithium ions.

When the greater ratio of lithium included in Li₂CO₃ and vanadium in V₂O₅ intercalated in (COOH)₂ of between 1.2:1 and 1.24:1 was present, the flat potential shown in FIGURE 5 was shown. Within the range to achieve the high discharge capacity, the plateau had a flat potential ranging from 0.20 to 0.25V at the intercalation of lithium ions, and the plateau had a flat potential ranging from 0.23 to 0.27V at the deintercalation of lithium ions.

In the lithium vanadium oxide according to one embodiment, the capacity was rapidly deteriorated when the charge and discharge were further repeated. When the cycle-life was deteriorated by 50% of the total capacity, a plateau was formed over 25% based on the entire reaction period. When the plateau was formed over 20% or more based on the entire reaction period, it did not cause substantial damage. When it was formed over 25% or more, it could provide a substantially sufficient performance. In addition, when the plateau was formed over 40% ore more based on the entire reaction period, it could provide a remarkably stable non-aqueous rechargeable battery.

According to one embodiment, lithium vanadium oxide included in the negative electrode 4 was obtained by firing an organic acid salt including lithium and vanadium so that the firing was uniformly performed, and the crystalline structure became stable. Thereby, the charge and discharge potential of the non-aqueous rechargeable cell 1 became stable to improve the charge and discharge characteristics.

As the organic acid salt was obtained by mixing Li₂CO₃ and V₂O₅ with (COOH)₂, the organic acid salt LiₐV_{b}M_{c}O_{d} C₂O₄ was easily provided by the wet method. The source for lithium may include another lithium compound, and the source for vanadium may include another vanadium compound. Further, it may further include an organic acid other than (COOH)₂.

According to the conventional method, since the lithium vanadium oxide included trivalent or quadrivalent vanadium, expensive V₂O₃ or V₂O₄ was required as a source for vanadium. However, according to one embodiment of the present invention, V₂O₅ including 5-valent vanadium was reduced into trivalent or quadrivalent vanadium in the wet method. Accordingly, the cost could be saved in preparing the negative material or the non-aqueous rechargeable battery including the same since the inexpensive V₂O₅ was substituted for the expensive sources.

Since the charge and discharge characteristics of the negative material had a plateau, the plateau had an average potential ranging from 0.20 to 0.25V on intercalating lithium ions, and the plateau had an average potential ranging from 0.23 to 0.27V on deintercalating lithium ions, a flat potential was formed near to that of the conventional negative material including graphite. Accordingly, it is possible to provide a non-aqueous rechargeable battery having high energy density by using lithium vanadium oxide having high capacity per volume instead of the conventional negative material.

While this invention has been described in connection with the foregoing practical exemplary embodiments, it is to be understood that the invention is not limited to the disclosed embodiments but, on the contrary, is intended to cover various modifications and equivalent arrangements included within the scope of the appended claims.

## Claims

1. A negative material for a non-aqueous rechargeable battery comprising lithium vanadium oxide:
wherein the lithium vanadium oxide has an open circuit potential having a plateau over 25% or more based on the entire reaction period of the intercalation or deintercalation of lithium ions;
wherein the plateau is varied within 0.05V when the lithium electrode is charged and discharged; and
wherein the plateau has an average potential of intercalation of lithium ions ranging from 0.20 to 0.25 V and an average potential of deintercalation of lithium ions ranging from 0.23 to 0.27 V.

2. The negative material for a non-aqueous rechargeable battery of claim 1,
wherein the plateau is formed over 25% or more based on the entire reaction period in the charge and discharge characteristics after the first intercalation and deintercalation of lithium ions.

3. The negative material for a non-aqueous rechargeable battery of claim 2,
wherein the plateau is formed over 40% or more based on the entire reaction period in the charge and discharge characteristics after the first intercalation and deintercalation of lithium ions.

4. The negative material for a non-aqueous rechargeable battery of claim 1:
wherein the lithium vanadium oxide has an open circuit potential having a plateau over 25% or more based on the entire reaction period of the intercalation or deintercalation of lithium ions;
wherein the plateau is varied within 0.05V when the lithium electrode is charged and discharged;
wherein the plateau has an average potential of intercalation of lithium ions ranging from 0.20 to 0.25 V and an average potential of deintercalation of lithium ions ranging from 0.23 to 0.27 V; and
wherein the plateau is formed over 25% or more based on the entire reaction period of the charge and discharge characteristics after the lithium ions are intercalated and deintercalated the first time.

5. The negative material for a non-aqueous rechargeable battery of any one of claims 1 to 4, wherein the lithium vanadium oxide is obtained or obtainable by firing an organic acid salt comprising lithium and vanadium.

6. The negative material for a non-aqueous rechargeable battery of claim 5,
wherein the organic acid salt is obtained or obtainable by mixing a lithium compound and a vanadium compound with an organic acid.

7. The negative material for a non-aqueous rechargeable battery of claim 6,
wherein the molar ratio of lithium and vanadium included in the lithium compound and the vanadium compound that are mixed with the organic acid ranges from 1.2:1 to 1.24:1.

8. The negative material for a non-aqueous rechargeable battery of claims 6 or 7, wherein the organic acid is added in a molar weight of 1.5 to 5 times more than the molar weight required for reacting with the lithium compound and the vanadium compound.

9. The negative material for a non-aqueous rechargeable battery of any one of the preceding claims, wherein the negative material has a peak intensity ratio of the (104) plane to the (003) plane ranging from 0.2 to 0.8.

10. A non-aqueous rechargeable battery, comprising:
a negative electrode;
a positive electrode; and
an electrolyte;
wherein the negative electrode comprises a lithium vanadium oxide having an open circuit potential having a plateau over 25% or more based on the entire reaction period of the intercalation or deintercalation of lithium ions;
wherein the plateau is varied within 0.05V when the lithium electrode is charged and discharged; and
wherein the plateau has an average potential of intercalation of lithium ions ranging from 0.20 to 0.25 V and an average potential of deintercalation of lithium ions ranging from 0.23 to 0.27 V.

11. The non-aqueous rechargeable battery of claim 10, wherein the plateau is formed over 25% or more based on the entire reaction period of the charge and discharge characteristics after the lithium ions are intercalated and deintercalated the first time.

12. The non-aqueous rechargeable battery of claim 11, wherein the plateau is formed over 40% or more based on the entire reaction period of the charge and discharge characteristics after the lithium ions are intercalated and deintercalated the first time.

13. The non-aqueous rechargeable battery of claim 10:
wherein the lithium vanadium oxide has an open circuit potential having a plateau over 25% or more based on the entire reaction period of the intercalation or deintercalation of lithium ions;
wherein the plateau is varied within 0.05V when the lithium electrode is charged and discharged;
wherein the plateau has an average potential of intercalation of lithium ions ranging from 0.20 to 0.25 V and an average potential of deintercalation of lithium ions ranging from 0.23 to 0.27 V; and
wherein the plateau is formed over 25% or more based on the entire reaction period of the charge and discharge characteristics after the lithium ions are intercalated and deintercalated the first time.

14. The non-aqueous rechargeable battery of any one of claims 10 to 14, wherein the lithium vanadium oxide is obtained or obtainable by by firing an organic acid salt including lithium and vanadium.

15. The non-aqueous rechargeable battery of claim 14, wherein the organic acid salt is obtained or obtainable by mixing a lithium compound and a vanadium compound with an organic acid.

16. The non-aqueous rechargeable battery of claim 15, wherein the molar ratio of lithium and vanadium included in the lithium compound and the vanadium compound mixed with the organic acid ranges from 1.2:1 to 1.24:1.

17. The non-aqueous rechargeable battery of claims 15 or 16, wherein the organic acid is added at 1.5 to 5 times more than the molar weight required for reacting with the lithium compound and the vanadium compound.

18. The non-aqueous rechargeable battery of any one of claims 10 to 17, wherein the negative material has a peak intensity ratio of the (104) plane to the (003) plane ranging from 0.2 to 0.8.

19. A method of making a lithium vanadium oxide for a negative material of a battery, which comprises mixing a lithium compound and a vanadium compound with an organic acid to obtain an organic acid salt precursor, and firing the organic acid salt precursor.

20. A method of making a lithium vanadium oxide as claimed in claim 19, which comprises dissolving the lithium compound, the vanadium compound and the organic acid in a solvent, preferably an aqueous solvent, to form an intimate mixture, and evaporating the solvent to form the organic acid salt precursor.

21. A method of making a lithium vanadium oxide as claimed in claims 19 or 20,
wherein the lithium vanadium oxide comprises at least one element M selected from the group consisting of transition elements, alkali metals, and alkaline earth metals, and wherein the method comprises mixing a compound of said at least one element M with the lithium compound, the vanadium compound and the organic acid.

22. A method of making a lithium vanadium oxide as claimed in claims 19, 20 or 21, wherein the organic acid salt precursor is fired under an inert atmosphere.

23. A lithium vanadium oxide obtainable by a method as claimed in any one of claims 19 to 22.

24. Use of a lithium vanadium oxide as claimed in claim 23, or as defined in any one of claims 1 to 18, for a negative material of a non-aqueous rechargeable battery.
